# EUROPEAN PATENT APPLICATION

(11) **EP 4 270 218 A1**
(43) Date of publication of application: **01.11.2023**
(21) Application number: 22170842.3
(22) Date of filing: 29.04.2022
(51) Int. Cl.: G06F 21/10

(54) **METHOD, APPARATUS, AND COMPUTER PROGRAM PRODUCT FOR PROVIDING PROTECTED MEDIA CONTENT**

(71) Applicant: Utopia Music AG, 6300 Zug (CH)
(72) Inventor: Wahlgren, Linus, 6300 Zug (CH); Flach, Max, 6300 Zug (CH); Kincy, Trevor, 6300 Zug (CH)
(74) Representative: MERH-IP Matias Erny Reichl Hoffmann Patentanwälte PartG mbB

(57) **Abstract**

A method, apparatus, and computer program product for providing protected media content. The method comprises: receiving (200), by a server apparatus, a media content request from the client apparatus, wherein the media content request comprises a media content identifier and an application key; comparing (202), by the server apparatus, the application key to one or more application keys stored in a database, wherein the database is configured to store the one or more application keys, media content licenses, and data related to media content; if the application key matches one of the one or more application keys, requesting (204), by the server apparatus from the database, a license related to the media content identifier and the application key; and if the license is found in the database, validating (206) the license by the server apparatus, and if the validating succeeds, retrieving (208), by the server apparatus, data related to the media content from the database, and transmitting (210), by the server apparatus, the data related to the media content to the client apparatus.

## Description

### FIELD

Various embodiments relate to a method, apparatus, and computer program product for providing protected media content.

### BACKGROUND

Hit songs and other copyright-protected media content are not generally available for use in applications such as video games. Licenses for such media content are traditionally negotiated by lawyers, music licencing agencies, with dedicated sync agents. Licenses have to cover the copyrights in the songs and recordings, and thus involve different types of license rights such a need for a synchronisation license and a master use license. How the media content will be distributed also has an influence on additional needs for licenses. If for example, a game is made available online on the internet, license for copying and for communicating the music are required.

Moreover, when copyrights are co-owned, there is a need to get separate permissions from each co-owner to be able to use a co-owned song, or copyrights rights may differ from a country to another one.

Furthermore, a game may have a licensed music only for a predefined period, i.e. when the music license has expired, the game has to be removed from the market and sales are stopped. One solution would be to negotiate a perpetual, worldwide license, which is not always easy nor agreed.

All these rules make music licensing for games very complicated, and all these limits the availability of the media content only to the largest actors in the video game industry due to large up-front costs.

In a similar manner, only the largest media content providers have the resources to offer media content for licensing to video games. Further, licensors may lack the tools for supervising the use of licensed media content in video games.

Digital rights management (DRM) solutions are available for the protection of media content. However, further solutions are needed to facilitate lawful distribution of protected media content.

### BRIEF DESCRIPTION

Thereto, the present disclosure provides a method for providing protected media content to a client apparatus executing a client application program, the method comprising receiving, by a server apparatus, a media content request from the client apparatus, wherein the media content request comprises a media content identifier and an application key; comparing, by the server apparatus, the application key to one or more application keys stored in a database, wherein the database is configured to store the one or more application keys, media content licenses, and data related to media content; if the application key matches one of the one or more application keys, requesting, by the server apparatus from the database, a license related to the media content identifier and the application key; and if the license is found in the database, validating the license by the server apparatus, and if the validating succeeds, retrieving, by the server apparatus, data related to the media content from the database, and transmitting, by the server apparatus, the data related to the media content to the client apparatus.

According to another aspect of the disclosure, the method may further comprise sending, by the client apparatus, the media content request comprising the media content identifier and the application key; receiving, by the client apparatus, the data related to the media content; and obtaining, by the client apparatus, the media content on the basis of the data related to the media content; and causing the client apparatus to output the media content via a user interface.

According to another aspect of the disclosure the data related to the media content may comprise the media content.

According to another aspect of the disclosure, the data related to the media content may comprise a digital rights management, DRM, key for decrypting the media content, and wherein the method further may comprise storing the media content in a DRM protected form; and decrypting, by the client apparatus, the media content using the DRM key.

According to another aspect of the disclosure, the method may comprise storing, by the client apparatus, the media content in the DRM protected form.

According to another aspect of the disclosure, the method may comprise caching, by the client apparatus, the media content for a predetermined time period.

According to another aspect of the disclosure, the method may comprise receiving, by the server apparatus, a content producer registration request comprising authentication details of the content producer and data related to the content producer; storing, by the server apparatus, the authentication details and the data related to the content producer to the database; receiving, by the server apparatus, an authentication request comprising the authentication details of the content producer; and performing authentication, by the server apparatus, on the basis of the authentication request, and if the authentication succeeds, transmitting, by the server apparatus, a content producer token in response to the authentication request.

According to another aspect of the disclosure, the method may comprise receiving, by the server apparatus, a file upload request comprising a media content file and the content producer token; validating, by the server apparatus, the content producer token, and if validating the content producer token succeeds, generating, by the server apparatus, a media content identifier for the media content file, and storing, by the server apparatus, the media content file and the media content identifier generated for the media content file to the database.

According to another aspect of the disclosure, the method may comprise receiving, by the server apparatus, a license registration request comprising the content producer token and a media content license related to a media content identifier; and validating, by the server apparatus, the content producer token, and if validating the content producer token succeeds, storing, by the server apparatus, the media content license to the database.

According to another aspect of the disclosure, the method may comprise receiving, by the server apparatus, an application registration request comprising authentication details of the client application program and data related to the application; storing, by the server apparatus, the authentication details and the data related to the client application program to the database; generating, by the server apparatus, an application key for the client application program and storing the application key in the database; transmitting, by the server apparatus, the application key in response to the application registration request.

According to another aspect of the disclosure, the method may comprise receiving, by the server apparatus, an authentication request comprising the authentication details of the of the client application program; performing authentication, by the server apparatus, on the basis of the authentication request, and if the authentication succeeds, transmitting, by the server apparatus, an application token in response to the authentication request. receiving, by the server apparatus, a license acquisition request comprising the application token and a license identifier; and validating the application token by the server apparatus, and if validating the application token succeeds, requesting, by the server apparatus, a license related to the license identifier from the database, and if the license is found, generating, by the server apparatus, a relationship between the license and the client application program, and storing, by the server apparatus, the generated relationship in the database.

According to another aspect of the disclosure the license may comprise wherein one or more geographical restrictions, and wherein the method further may comprise acquiring, by the server apparatus, an Internet Protocol, IP, address of the client apparatus; determining, by the server apparatus, a geographic position of the client apparatus on the basis of the acquired IP address; and validating, by the server apparatus, the license by comparing the geographic position of the client apparatus to the one or more geographic restrictions of the license, and if the geographic position of the client apparatus violates the one or more geographic restrictions of the license, failing the validating.

The present disclosure also provides a server apparatus for providing protected media content to a client apparatus executing a client application program, the server apparatus comprising one or more processors and one or more memories including computer program code, the one or more memories and the computer program code configured to with the one or more processors, cause the server apparatus at least to perform: receiving a media content request from the client apparatus, wherein the media content request comprises a media content identifier and an application key; comparing the application key to one or more application keys stored in a database, wherein the database is configured to store application keys, media content licenses, and data related to media content; if the application key matches one of the one or more application keys, requesting, from the database, a license related to the media content identifier and the application key, and if the license is found in the database, validating (the license, and if the validating succeeds, retrieving data related to the media content from the database, and transmitting the data related to the media content to the client apparatus.

The present disclosure further provides a system comprising the client apparatus and the server apparatus.

The present disclosure further comprises a computer program product readable by a computer and comprising program instructions which, when executed by the computer, cause the computer to carry out a computer process comprising: receiving a media content request, wherein the media content request comprises a media content identifier and an application key; comparing the application key to one or more application keys stored in a database, wherein the database is configured to store application keys, media content licenses, and data related to media content; if the application key matches one of the one or more application keys, requesting, from the database, a license related to the media content identifier and the application key, and if the license is found in the database, validating the license, and if the validating succeeds, retrieving data related to the media content from the database, and transmitting the data related to the media content.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an apparatus and a system as a block diagram;
FIG. 2 illustrates embodiments of a method;
FIG. 3 illustrates embodiments as a signal sequence diagram;
FIG. 4-6 illustrate embodiments of a method;
FIG. 7 illustrates embodiments related to registering a content producer as a signal sequence diagram;
FIG. 8 and FIG. 9 illustrate embodiments related to storing media content;
FIG. 10 and FIG. 11 illustrate embodiments related to registering a license;
FIG. 12 and FIG. 13 illustrate embodiments related to registering an application;
FIG. 14, FIG. 15 and FIG. 16 illustrate embodiments related to acquiring a license;
FIG. 17 illustrates embodiments related to browsing media content;
FIG. 18 illustrates embodiments related to geographical restrictions; and
FIG. 19 illustrates embodiments of an apparatus as a block diagram.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

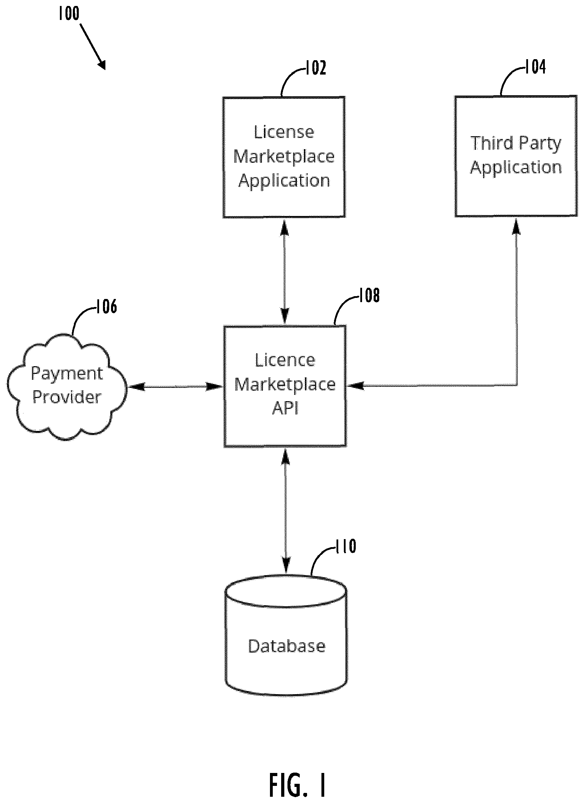

Let us simultaneously discuss embodiments of a method, an apparatus, and a system for providing protected media content with reference to FIG. 1, FIG. 2, and FIG. 3.

With reference to FIG. 1, a license marketplace application programming interface (API) 108 facilitates providing protected media content. The licence marketplace API communicates with a licence marketplace application 102 and/or a third party application 104. Additionally, the licence marketplace API communicates with a payment provider 106 and/or database 110. The communication between 102, 104, 106, 108, and/or 110 may be wired and/or wireless communication.

In the followings, the parties involved in providing protected songs and more generally media content may include content producers, application developers, and application users. Media content producers create, produce and/or own the media content. The content producers may hold immaterial rights, such as copyrights, for the media content. It may be in the content producers' interest to enforce these rights, but also to provide, i.e. license, the media content to a wider audience for a reasonable compensation. Application developers create applications and they may wish to embed media content to the applications. Application users use the applications created by the application developers. The application users may be the end consumers of the media content.

It is understood that the application(s) developed by the application developers may also be considered media content. The present disclosure refers to media content as media content that may be provided to the application(s) e.g. to complement or form a part of the application(s), for example. Nevertheless, an application may be further provided to another application as media content.

The content producers may make their media content available via the license marketplace application 102. Application developers may obtain media content via the license marketplace application 102 for use in third party application(s) 104 developed by the application developers. The application users of the third party application(s) 104 may consume the media content via the third party application(s) 104. The license marketplace API 108 may coordinate some or all of the above-mentioned functionalities.

Media content as referred to herein may include audio, such as music, images, video, or any other type of media content. The application(s) (client application program(s)) that the media content may be provided to may include video games, video game engines, advertisements, movies, music streaming platforms, video streaming platforms, and disc jockey (DJ) applications, for example.

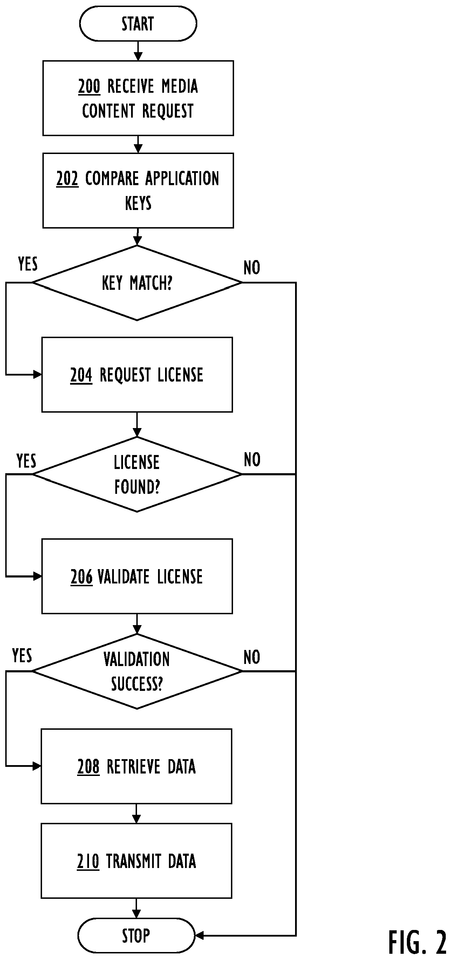

Let us now describe embodiments of a method with reference to FIG. 2. According to an aspect, a method for providing protected media content to a client apparatus executing a client application program comprises: receiving 200, by a server apparatus, a media content request from the client apparatus, wherein the media content request comprises a media content identifier and an application key; comparing 202, by the server apparatus, the application key to one or more application keys stored in a database, wherein the database is configured to store the one or more application keys, media content licenses, and data related to media content; if the application key matches one of the one or more application keys, requesting 204, by the server apparatus from the database, a license related to the media content identifier and the application key; and if the license is found in the database, validating 206 the license by the server apparatus, and if the validating succeeds, retrieving 208, by the server apparatus, data related to the media content from the database, and transmitting 210, by the server apparatus, the data related to the media content to the client apparatus.

Technical effects of the solution include providing access to protected media content while complying with the license specified for the media content. The protected media content is thus provided to a wider audience -the users of the application- without compromising the owner(s)'s rights to the media content. It will be well understood that owner's rights may indifferently mean a single owner or co-owners or all owners needed to provide a proper license for a media content. It is presumed that anyone who is proposing a license either owns all the rights needed or is authorized to do so. A registration of the content producer is provided hereinafter in the specification in an embodiment.

Processing the license by the server apparatus further improves security, and may additionally improve usability for the user of the client apparatus.

According to an aspect, a server apparatus for providing protected media content to a client apparatus executing a client application program comprises one or more processors and one or more memories including computer program code, wherein the one or more memories and the computer program code are configured to with the one or more processors, cause the server apparatus at least to perform the method according to FIG. 2 or any one of its embodiments described herein.

The server apparatus may be configured to provide the license marketplace API 108. The server apparatus and/or the licence marketplace API 108 may be configured to perform the method of FIG. 2 or any of its embodiments described herein. The client application program executed by the client apparatus may be the third party application 104. The database 110 may be configured to store the application keys, including the one or more application keys, the media content licenses, and the data related to the media content. In an embodiment, the server apparatus comprises the database.

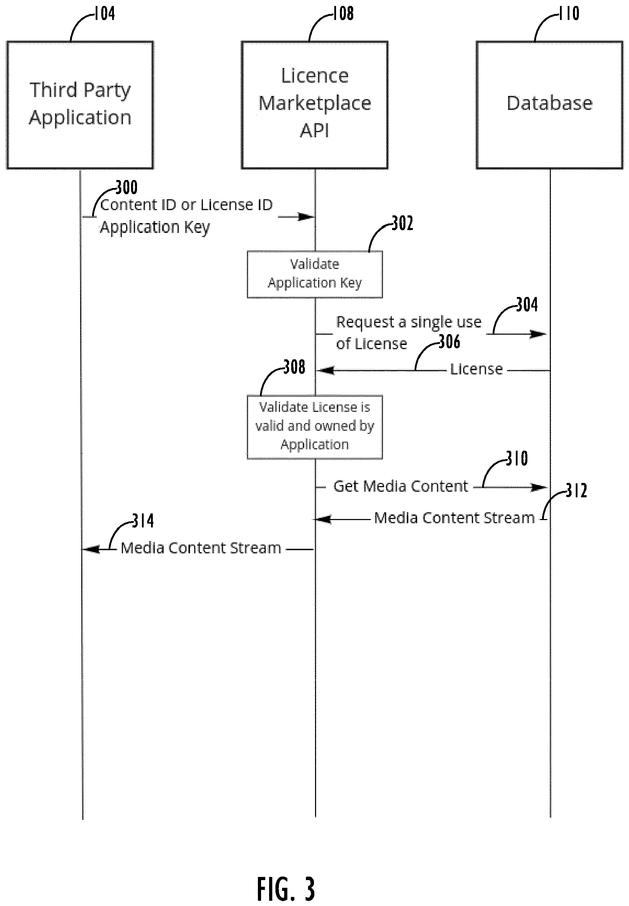

FIG. 3 illustrates embodiments of the method as a signal sequence diagram. In 300, the client apparatus / the third party application 104 sends a media content request to the server apparatus / the license marketplace API 108. The media content request may comprise a media content identifier, and the application key of the client application program (i.e. the third party application 104). Additionally or alternatively to the media content identifier, the media content request may comprise a license identifier.

In 302, the server apparatus validates the application key. The server apparatus compares the application key to one or more application keys stored in the database 110. If the application key matches one of the one or more application keys stored in the database 110, the server apparatus requests a license related to the media content identifier and the application key. In 304, the server apparatus requests a single use license or a single use of a license for the media content. Alternatively or additionally, the server apparatus may request another kind of license, such as a multiple-use license or a perpetual license.

If the license is found in the database 110, it is received by the server apparatus in 306. The server apparatus then validates 206 the license. In 308, the validating step verifies that the license is valid, e.g. it has not been disabled in the database, and that the license is owned by the application whose application key was provided in 300. Ownership of the license may be stored in the database 110, e.g. as a relationship between the license and the application key.

If the step of validating 206 succeeds, the server apparatus retrieves 208 data related to the media content and transmits the data to the client apparatus. In an embodiment, the data related to the media content comprises the media content. In 310, the server apparatus requests the media content from the database 110. In 312, the media content is provided from the database to the server apparatus as a media content stream. In 314, the server apparatus transmits the media content to the client apparatus as a media content stream.

When the data related to the media content comprises the media content, the media content may be better protected as it is only provided to the client apparatus following successful validation of the application key and the license. Use of memory for media storage on the client apparatus may also be reduced. With applications wherein media content is traditionally stored as a part of the client application program, the size of the client application program, or the corresponding binary or executable file, may be reduced.

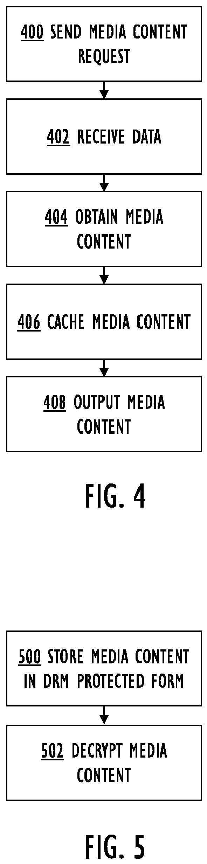

FIG. 4 illustrates embodiments of the method related to actions performed by the client apparatus. An embodiment further comprises: sending 400, by the client apparatus, the media content request comprising the media content identifier and the application key; receiving 402, by the client apparatus, the data related to the media content; and obtaining 404, by the client apparatus, the media content on the basis of the data related to the media content; and causing the client apparatus to output 408 the media content via a user interface.

Embodiments of the above-described steps 400 and 402 were also illustrated in FIG. 3 as 300 and 314, respectively. When the data related to the media content comprises the media content, the client apparatus may obtain the media content directly from the data related to the media content. The client apparatus may comprise the user interface.

The license may comprise an output count limit. In an embodiment, the method comprises tracking the number of times the client apparatus has output the media content via the user interface. The client/server apparatus may compare the number of times the client apparatus has output the media content to the output count limit. If the number is greater than or equal to the output count limit, the client/server apparatus may prevent further outputting the media content via the user interface of the client apparatus. This may be performed e.g. by failing the validating 206 of the license.

Further, the number of times the client apparatus has output the media content may be stored in the database by the server apparatus. The content producer may request the number or the total number of times different client apparatuses have output the media content e.g. via the license marketplace application. The server apparatus may transmit the number(s) to the content producer apparatus via the license marketplace application, for example.

FIG. 5 illustrates embodiments related to providing additional protection to the media content. In an embodiment, the data related to the media content comprises a digital rights management (DRM) key for decrypting the media content, and the method further comprises: storing 500 the media content in a DRM protected form; and decrypting 502, by the client apparatus, the media content using the DRM key. Various techniques of DRM protection, such as encryption, are known in the art, and they are not described in more detail herein. The media content may be stored by the server apparatus and/or the client apparatus in the DRM protected form. When the media content is stored by the server apparatus, the data related to the media content may comprise the media content, in the DRM protected form. The DRM protected media content may be received by the client apparatus in the data related to the media content, and decrypted by the client apparatus using the DRM key provided in the data related to the media content.

In an embodiment, the method further comprises storing, by the client apparatus, the media content in the DRM protected form. The client apparatus may store the media content as a part of the client application program, for example. Alternatively or additionally, the client apparatus may store the media content in a database or on a computer-readable medium. Storing the media content on the client apparatus may reduce data transmission between the client apparatus and the server apparatus.

In an embodiment, the method comprises storing, by the client apparatus, the media content (only) in volatile memory. Volatile or transitory memory refers to memory that requires power to retain information stored in the memory. If the power is interrupted, the information is lost from the memory. This further enhances the protection of the media content, as the volatile memory does not permanently store the media content on the client apparatus. The client apparatus may comprise the volatile memory.

In an embodiment, the method further comprises caching 406, by the client apparatus, the media content for a predetermined time period. The server computer may transmit the predetermined time period to the client apparatus, in the data related to the media content, for example. Caching the media content for a predetermined time period may reduce the need for data transmission between the client apparatus and the server apparatus, but also maintain the protection of the media content, as the media content is cached only for a predetermined amount of time. This also protects the client application program from unexpected communication breaks with the server apparatus. The predetermined time period may be one week, for example.

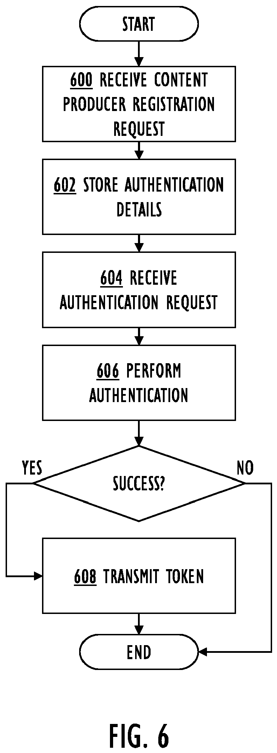

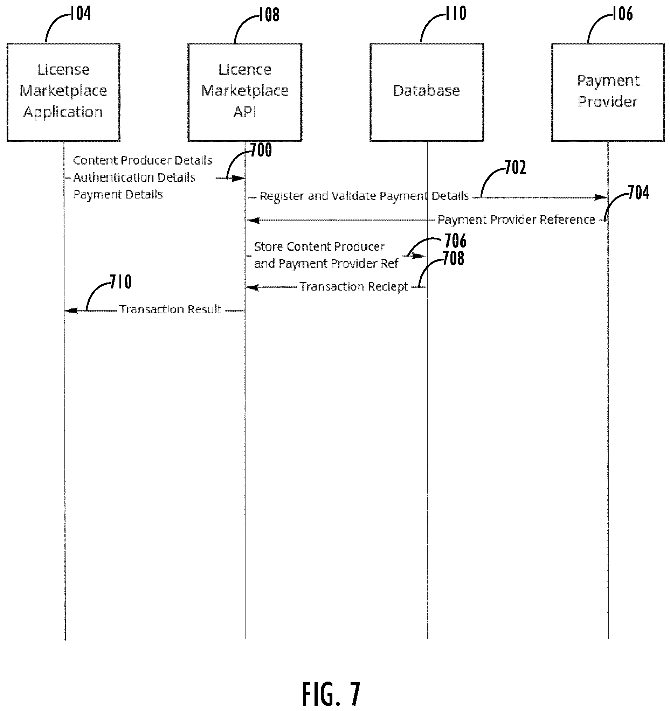

FIG. 6 and FIG. 7 illustrate embodiments related to registering a content producer. In an embodiment, the method further comprises: receiving 600, by the server apparatus, a content producer registration request comprising authentication details of the content producer and data related to the content producer; storing 602, by the server apparatus, the authentication details and the data related to the content producer to the database; receiving 604, by the server apparatus, an authentication request comprising the authentication details of the content producer; and performing 606 authentication, by the server apparatus, on the basis of the authentication request, and if the authentication succeeds, transmitting 608, by the server apparatus, a content producer token in response to the authentication request.

In FIG. 7, the server apparatus receives a content producer registration request 700. The content producer registration request comprises authentication details of the content producer and data related to the content producer. The content producer registration request may comprise details of the content producer, such as a name and other identifying information. The content producer registration request may comprise payment details of the content producer. A content producer apparatus may send the content producer registration request to the server apparatus. A content producer may operate the content producer apparatus to send the content producer registration request. Alternatively or additionally, the license marketplace application may receive the content producer registration request from the content producer apparatus. The license marketplace application 104 may send the content producer registration request 700 to the license marketplace API 108.

It will be well understood as stated above that the content producer may be one person, a group of persons or entity who own the copyrights, when a right is co-owned by different persons or entities. All parties involved in a media content may be requested to register and provide their details, or one may register on behalf of the others, or each one register.

The server apparatus may register payment details of the content producer by storing them in the database 110. The server apparatus may validate 702 the payment details of the content producer by sending them to payment provider 106 and receiving a payment provider reference 704 from the payment provider. The server apparatus may store at least a part of the data related to the content producer in the database 110 in 706. The server apparatus may also store the payment provider reference to the database. A transaction receipt may be sent from the database 110 and received by the server apparatus in 708.

The server apparatus or the database may generate a content producer identifier (ID) for the content producer. The server apparatus may store the content producer ID in the database. The server apparatus may send a transaction result as a result of the registration to the license marketplace application in 710. Alternatively or additionally, the transaction result may be sent to the content producer apparatus. The transaction result may comprise the content producer ID generated for the content producer.

The above embodiments facilitate identifying the content producer in further actions performed by the system.

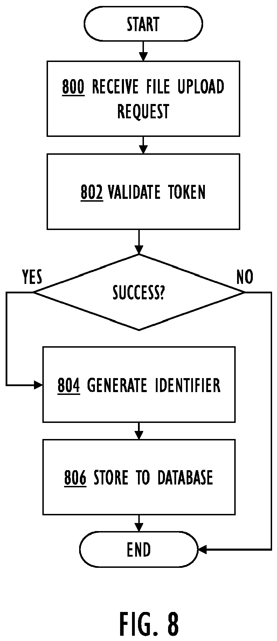

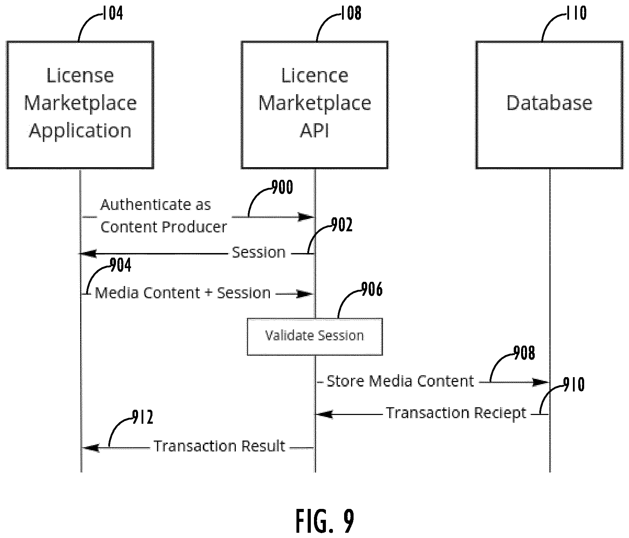

FIG. 8 and FIG. 9 illustrate embodiments related to storing media content. In an embodiment, the method comprises receiving 800, by the server apparatus, a file upload request comprising a media content file and the content producer token; validating 802, by the server apparatus, the content producer token, and if validating the content producer token succeeds, generating 804, by the server apparatus, a media content identifier for the media content file, and storing 806, by the server apparatus, the media content file and the media content identifier assigned for the media content file to the database.

In FIG. 9, the server apparatus receives 604 an authentication request 900 comprising the authentication details of the content producer. The server apparatus may then perform authentication 606 as illustrated in FIG. 6. The server apparatus may perform the authentication by comparing the authentication details of the authentication request to the authentication details stored in the database 110, for example. If the authentication succeeds, the server apparatus may transmit a content producer token 902, also known as a session token, in response to the authentication request. The token may be used by the server apparatus to identify the source of messages sent, in this case the content producer, during a communication session. The server apparatus may then receive 800 a file upload request 904 comprising a media content file and the content producer token. The server apparatus may validate 802 the token in 906 e.g. by comparing it to tokens stored in the memory or database by the server apparatus. If validating the token succeeds, the server apparatus or the database may generate 804 a media content identifier for the media content file. The server apparatus may store 806 the media content file in the database in 908, along with the media content identifier that was generated for the media content file. Additionally, the server apparatus may store the owner of the media content file to the database. The server apparatus may determine the owner on the basis of the content producer token, for example. The content producer token may comprise the content producer ID, and the server apparatus may store the content producer ID in the database as the owner of the media content file.

It is noted that the media content file may be in any suitable file format including streaming file formats. Alternatively or additionally, the media content file may comprise a plurality of media content files that together form the media content file. The media content file comprises media content.

The above embodiments allow for adding media content to the system by content producers so that it may be provided to a wider audience.

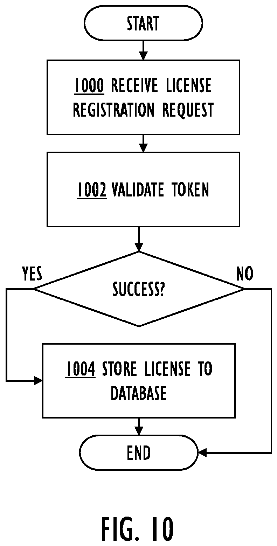

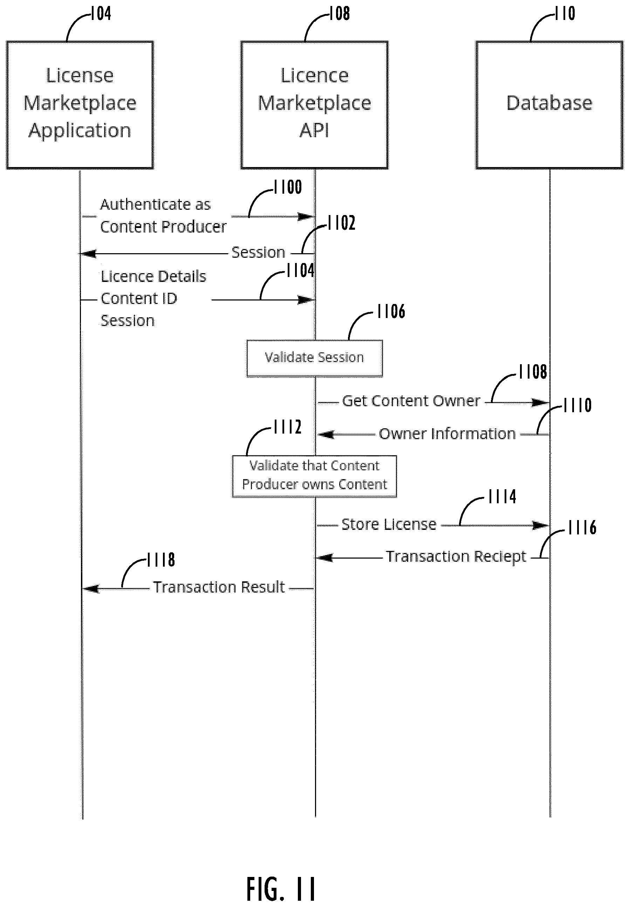

FIG. 10 and FIG. 11 illustrate embodiments related to registering a license. In an embodiment, the method further comprises receiving 1000, by the server apparatus, a license registration request comprising the content producer token and a media content license related to a media content identifier; and validating 1002, by the server apparatus, the content producer token, and if validating the content producer token succeeds, storing 1004, by the server apparatus, the media content license to the database.

In another embodiment not represented, information to be provided on the need for further licenses from other parties, or for other uses relating to the media content may be requested. Thus, when multiple licenses are required for a media content, the content producer making the registration request is supposed to have them all, or to provide complementary information so that other content producers may be notified and complete the registration.

In FIG. 11, authentication is performed in 1100 and 1102 similarly to respective steps 900 and 902 of FIG. 9. The server apparatus may be configured to receive 1000 a license registration request 1104 comprising the content producer token and a media content license. The media content license is related to a media content identifier, or to a media content (file) identified by the media content identifier. The license registration request may comprise the media content identifier. The server apparatus may validate 1002 the token in 1106, as in step 906 of FIG. 9. In an embodiment, the validating comprises verifying 1112 the owner of the media content (identifier). The server apparatus may perform the verifying on the basis of the content producer token, for example. The server apparatus may retrieve 1108, and receive 1110, from the database, the owner of the media content (file) that has the media content identifier the media content license is related to. The server apparatus may compare the owner of the media content file stored in the database to the content producer ID associated with the content producer token, for example. If the owner and the content producer ID do not match, the server apparatus may fail the validating.

If the validating succeeds, the server apparatus may store 1004 the media content license to the database. The license is stored in the database in 1114 and a transaction receipt 1116 is sent from the database and received by the server apparatus. The server apparatus or the database may generate a license ID for the media content license and store the license ID in the database. The license ID may be included in the transaction receipt 1116, and additionally in the transaction result 1118, for example. The server apparatus may transmit the license ID to the license marketplace application and/or the content producer apparatus.

The media content license exists as a database entry. It may comprise for example a media content ID Type of license, i.e. for example specifying whether the license is open or a free content wherein no compensation is required for using the media content in the client application program. The license may be for a single or multiple use, etc. It may also comprise information whether it is available to purchase directly or if not, the content producer should explicitly grant the license manually. It may also comprise the price per use, a list of current applications that have subscribed to the license and their respective usage information, etc. Interaction with the payment provider 106 may not be necessary when acquiring or outputting media content with such a license.

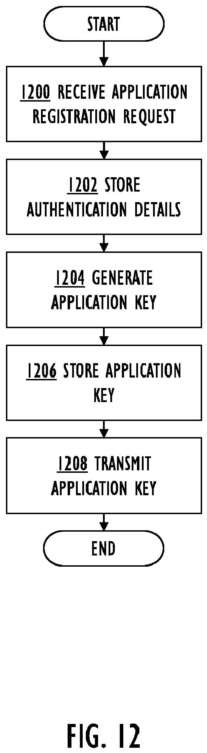

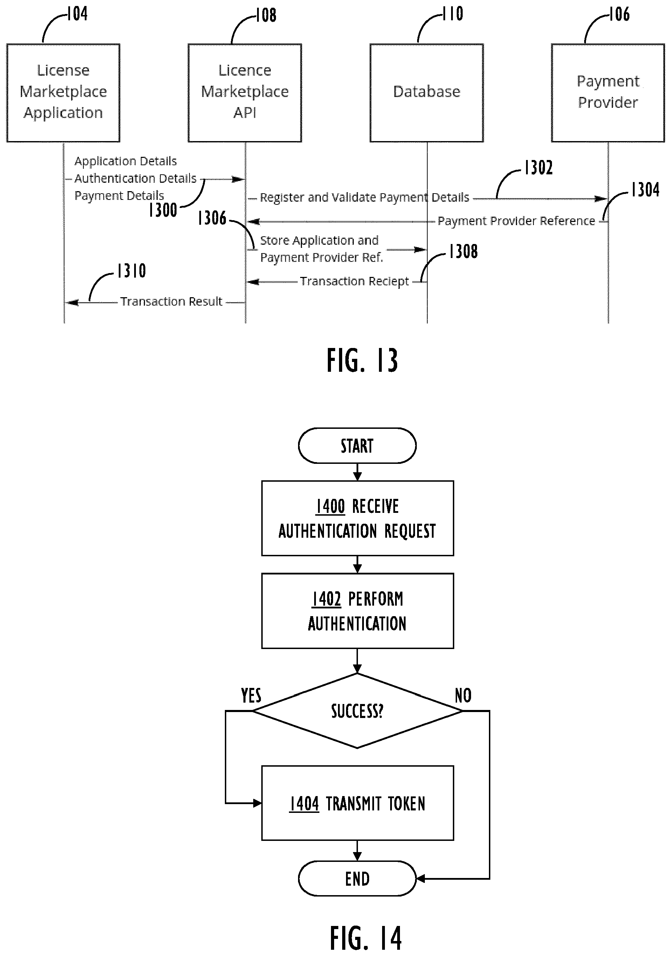

FIG. 12 and FIG. 13 illustrate embodiments related to registering an application. In an embodiment, the method comprises: receiving 1200, by the server apparatus, an application registration request comprising authentication details of the client application program and data related to the application; storing 1202, by the server apparatus, the authentication details and the data related to the client application program to the database; generating 1204, by the server apparatus, an application key for the client application program and storing 1206 the application key in the database; transmitting 1208, by the server apparatus, the application key in response to the application registration request.

In FIG. 13, the server apparatus receives 1200 an application registration request 1300. The application registration request may comprise authentication details of the application developer and/or the client application program. It may also comprise data related to the client application program developed by the application developer. The application registration request may comprise details of the application developer or the application, such as a name and other identifying information. The application registration request may comprise payment details of the application developer. An application developer apparatus may send the application registration request to the server apparatus. An application developer may operate the application developer apparatus to send the application registration request. Alternatively or additionally, the license marketplace application may receive the application registration request from the application developer apparatus. The license marketplace application 104 may send the application registration request 1300 to the license marketplace API 108.

The server apparatus may register payment details of the application developer by storing them in the database 110. The server apparatus may validate 1302 the payment details of the application developer by sending them to payment provider 106 and receiving a payment provider reference 1304 from the payment provider. The server apparatus may store at least a part of the data related to the application and/or application developer in the database 110 in 1306. The server apparatus may also store the payment provider reference to the database. A transaction receipt may be sent from the database 110 and received by the server apparatus in 1308.

The server apparatus or the database may generate an application identifier (ID) for the client application program. The server apparatus may store the application ID in the database. The server apparatus may send a transaction result as a result of the registration to the license marketplace application in 710. Alternatively or additionally, the transaction result may be sent to the content producer apparatus. The transaction receipt 1308 and/or result 1310 may comprise the application ID generated for the client application program.

Additionally, the server apparatus may generate an application key for the client application program. The server apparatus may store the application key in the database. The server apparatus may transmit 1206 the application key in response to the application registration request. The transaction receipt 1308 and/or result 1310 may comprise the application key generated for the client application program.

The application key of a client application program may be unique with respect to other application keys other client application programs. Copies of a client application program however may have the same application key. For example, a first client application program (e.g. the video game "Rocket League" executed on the client apparatus of a first user) may have a first application key, and a second client application program (e.g. the video game "Grand Theft Auto" executed on the client apparatus of the first user) may have a second application key. A copy of the first client application (e.g. the video game "Rocket League" executed on the client apparatus of a second user) may however have the first application key, as the client application program is the same or similar to the first client application program.

The application key may be used similarly to a session token since it can be traced back to an application ID of the client application program stored in the database. The application may be considered a password that is unique across the entire system and since only the system/server apparatus and the application developer/client application program know the application key, it can be easily verified and used for authentication. The application key may be stored with/in the client application program developed by the application developer. The client application program may thus receive media content licensed for the respective application key from the server apparatus.

The above embodiments facilitate identifying the application and/or the application developer in further actions performed by the system. Further, the application key allows for examining licenses and their usage from the perspective of individual applications (client application programs). The burden of handling (e.g. acquiring, and paying for) the licences is shifted from the end users (user(s) of the client apparatus(es)) to the application developers.

FIG. 14, FIG. 15, and FIG. 16 illustrate embodiments related to acquiring a license. In an embodiment, the method comprises receiving 1400, by the server apparatus, an authentication request comprising the authentication details of the of the client application program; and performing 1402 authentication, by the server apparatus, on the basis of the authentication request, and if the authentication succeeds, transmitting 1404, by the server apparatus, an application token in response to the authentication request. In an embodiment, the authentication details comprise the application key of the client application program. In an embodiment, the method further comprises: receiving 1500, by the server apparatus, a license acquisition request comprising the application token and a license identifier; validating 1502 the application token by the server apparatus, and if validating the application token succeeds, requesting 1504, by the server apparatus, a license related to the license identifier from the database, and if the license is found, generating 1506, by the server apparatus, a relationship between the license and the client application program, and storing 1508, by the server apparatus, the generated relationship in the database.

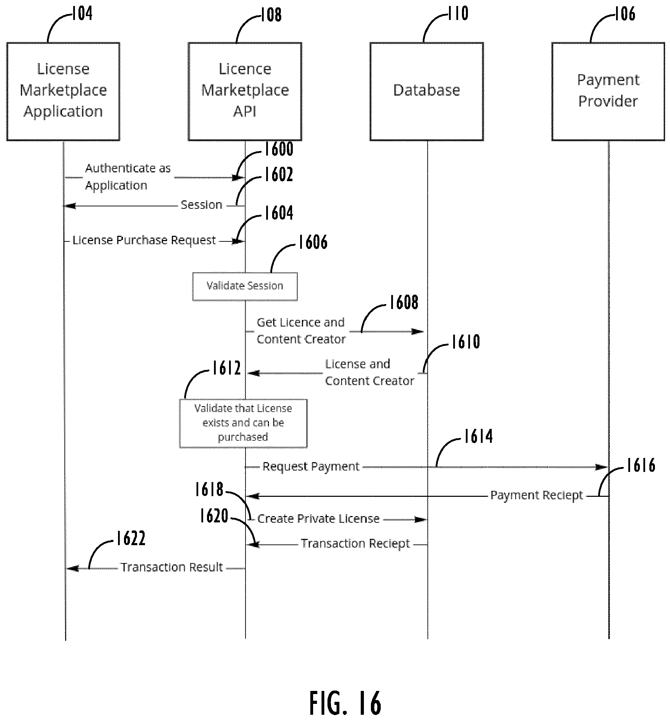

In FIG. 16, the server apparatus receives the authentication request 1600. The server apparatus performs 1402 the authentication and transmits 1404 the application token in 1602. The server apparatus receives the license acquisition request 1604 and validates 1606 the application token included in the license acquisition request. If the validating succeeds, the server requests 1504, from the database, a license that corresponds to the license identifier (ID) included in the license acquisition request in 1608. The server apparatus may also request information related to the content producer who uploaded the license to the database. The license (and content producer information) are provided to the server apparatus in 1610. In 1612, the server apparatus may validate the license e.g. by reading the database and checking that the license exists and is not disabled in any way. In 1614, the server apparatus may request payment for the license from the payment provider 106. The apparatus may transmit, from the database, the payment details or payment provider reference of the content producer who owns the license, to the payment provider. After handling the payment, the payment provider 106 may send a receipt 1616 to the server apparatus that receives the receipt. Receiving the receipt may trigger the server apparatus to generate a relationship between the license and the client application program and to store the relationship in the database in 1618. The relationship may be in the form of a database relation or an entry in a table of the database, for example. A transaction receipt may be sent from the database 110 and received by the server apparatus in 1620. The server apparatus may send a transaction result as a result of the license acquisition to the license marketplace application in 1622. Alternatively or additionally, the transaction result may be sent to the content producer apparatus.

The license acquisition request 1604 may further include license parameters such as license duration, total number of invocations, etc.

In an embodiment, the relationship is generated between the application key of the client application program and the license.

The above embodiments allow for acquiring licenses for specific client application program(s). The client application program may later utilize the acquired license using its application key as described in relation to FIG. 2.

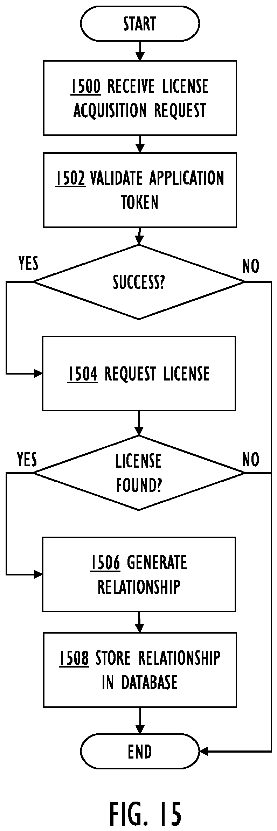

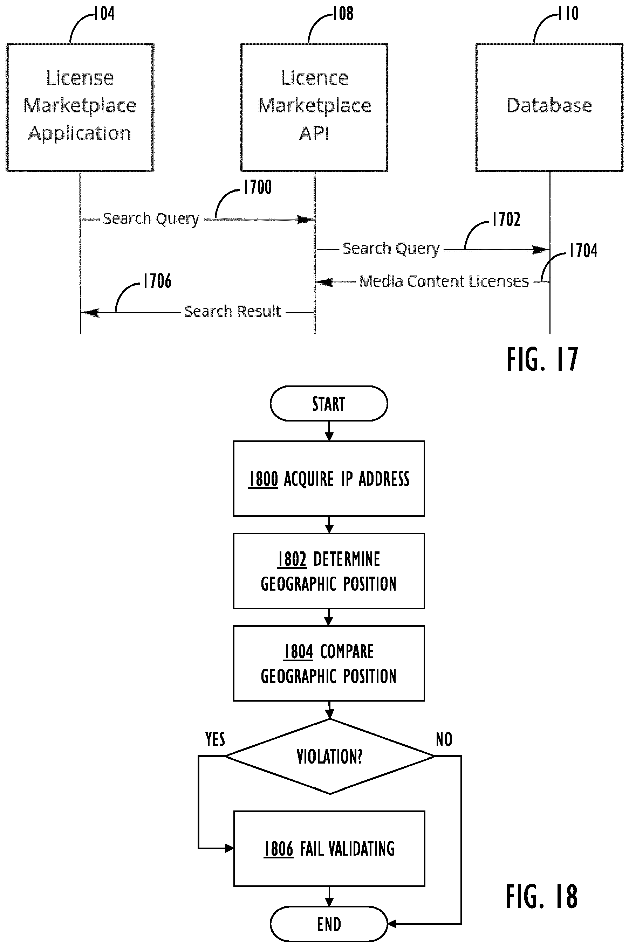

FIG. 17 illustrates embodiments related to browsing media content. In 1700, the server apparatus receives a search query from e.g. the application developer apparatus. In the example of FIG. 17, the query may be a license query requesting available license(s) for a certain media content. The server apparatus performs a corresponding database search query to the database 110 in 1702. Media content licenses that were found in the database are returned to the server apparatus in 1704, and passed onwards to the license marketplace application in 1706 and to the source of the search query, e.g. the application developer apparatus. After receiving the available media content licences, the application developer using the application developer apparatus may select a suitable license for their client application program and acquire it as described in relation to FIG. 15 and FIG. 16, for example.

FIG. 18 illustrates embodiments related to geographical restrictions. In an embodiment, the license comprises one or more geographical restrictions. For example, the license may only allow outputting the media content in specific countries or geographical areas. In an embodiment, the method further comprises: acquiring 1800, by the server apparatus, an Internet Protocol, IP, address of the client apparatus; determining 1802, by the server apparatus, a geographic position of the client apparatus on the basis of the acquired IP address; and validating, by the server apparatus, the license by comparing 1804 the geographic position of the client apparatus to the one or more geographic restrictions of the license, and if the geographic position of the client apparatus violates the one or more geographic restrictions of the license, failing 1806 the validating. The geographical restrictions of the license are thus enforced by the server apparatus.

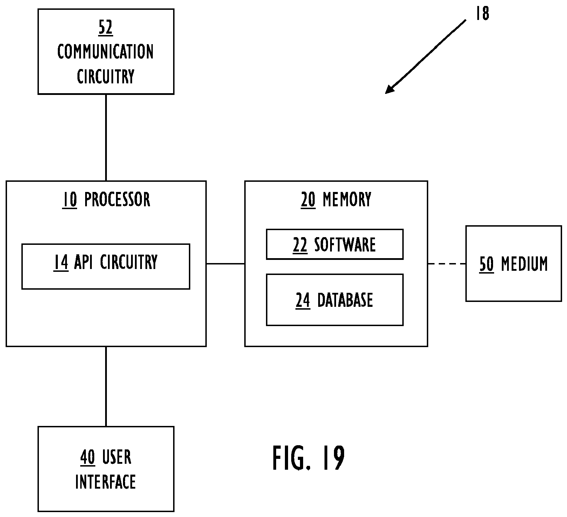

FIG. 19 illustrates embodiments of an apparatus or part of a system as a block diagram. A system for providing protected media content to a client apparatus executing a client application program comprises the client apparatus and the server apparatus 18. In an embodiment, the system further comprises the content producer apparatus and/or the application developer apparatus.

The apparatus of FIG. 19 may be the server apparatus, the client apparatus, the content producer apparatus, or the application developer apparatus, for example. The apparatus of FIG. 18 may comprise a processing system configured to perform the method of FIG. 2, or any one of the embodiments thereof. The processing system may comprise at least one processor 10 and at least one memory 20.

The apparatus may further comprise a user interface 40 comprising a display screen or another display unit, an input device such as one or more buttons and/or a touch-sensitive surface, and an audio output device such as a loudspeaker. When the apparatus is the client apparatus, the apparatus may output the media content via the user interface. When the apparatus is the content producer apparatus or the application developer apparatus, the user interface may output a licence marketplace application user interface for receiving user inputs from the content producer(s) or application developer(s) to trigger actions performed by the licence marketplace application. For example, the license marketplace application user interface may provide information on available media content and licenses. The license marketplace application user interface may provide functionalities for adding media content and licenses for media content producers, and functionalities for acquiring media content licenses for application developers, for example.

When the apparatus is the server apparatus, the processor 10 may comprise a license marketplace API circuitry 14 configured to perform at least some of the steps of the procedure of FIG. 2, such as steps 200, 202, 204, 206, 208, and 210, or any one of the embodiments thereof. The license marketplace API circuitry 14 may be configured to cause performance of the licence marketplace API 108.

The processor may comprise a licence marketplace application circuitry configured to perform at least some of the steps described in relation to FIG. 7, FIG. 9, FIG. 11, FIG. 13, FIG. 16 and/or FIG. 17 or any one of the embodiments thereof. The license marketplace application circuitry may be configured to cause performance of the license marketplace application 104.

When the apparatus is the client apparatus, the processor may comprise a client application program circuitry configured to perform at least some of the steps of the procedures of FIG. 4 and/or FIG. 5, such as steps 400, 402, 404, 406, 408, 500, and/or 502, or any one of the embodiments thereof. The client application program circuitry may be configured to cause execution of the client application program. The client application program circuitry may be configured to cause performance of the third party application 104.

The apparatus may comprise a communication circuitry 52 connected to the processor 10. The communication circuitry may comprise a radio modem and appropriate radio circuitries for establishing a communication connection between e.g. the server apparatus and the client apparatus. Suitable radio protocols may include IEEE 802.11-based protocols, cellular communication protocols, and the Bluetooth^{®} communication protocol. The processor 10 may use the communication circuitry 52 to transmit and receive frames or data according to the supported wireless communication protocol. The frames may carry a payload data comprising the media content request, or the data related to the media content. In some embodiments, the processor 10 may use the communication circuitry 52 to transmit the media content request to the server apparatus, or the data related to the media content to the client apparatus, for example.

The memory 20 may store a computer program product 22 defining computer program instructions for carrying out the method of FIG. 2 or any one of the embodiments thereof. The memory may further store a database 24 configured to store the one or more application keys, media content licenses, and data related to media content. The database 24 may correspond to the database 110 of FIG. 1.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with FIG. 2 may be carried out by a system comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, and circuitry. In an embodiment, the at least one processor, the memory, and the computer program code form processing means or comprises one or more computer program code portions for carrying out one or more operations according to any one of the embodiments of the method of FIG. 2 or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with FIG. 2 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium 50 readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described with reference to one or more embodiments according to the accompanying drawings, it is clear that the invention is not restricted thereto but may be modified in several ways within the scope of the appended claims. All words and expressions should be interpreted broadly, and they are intended to illustrate, not to restrict, the embodiments. It will be obvious to a person skilled in the art that, as technology advances, the inventive concept may be implemented in various ways.

Thanks to this disclosure, it is possible for a developer of content, the content being either video, game, or any other content, to access easily to music and allow content producers to have control on the licenses terms to be proposed and scope the terms of use. Both content producers and developers of content can now directly access to each others, some uploading their creations, list one or multiple licenses that can be used to gain access to said content and optionally enter payment information. The developers can then register their application and browse easily the various content on the platform. If they wish to purchase a license the payment is facilitated using a Payment Solution Provider.

Thanks to this disclosure, it is advantageously possible to keep track of the times a license is invoked along with some additional metadata such as geolocation of the user. The usage data may be also available as statistics for the content producer, providing them with valuable insight into their demographic.

## Claims

1. A method for providing protected media content to a client apparatus executing a client application program, the method comprising:
receiving (200), by a server apparatus, a media content request from the client apparatus, wherein the media content request comprises a media content identifier and an application key;
comparing (202), by the server apparatus, the application key to one or more application keys stored in a database, wherein the database is configured to store the one or more application keys, media content licenses, and data related to media content;
if the application key matches one of the one or more application keys, requesting (204), by the server apparatus from the database, a license related to the media content identifier and the application key; and
if the license is found in the database, validating (206) the license by the server apparatus, and if the validating succeeds, retrieving (208), by the server apparatus, data related to the media content from the database, and transmitting (210), by the server apparatus, the data related to the media content to the client apparatus.

2. The method of claim 1, further comprising:
sending (400), by the client apparatus, the media content request comprising the media content identifier and the application key;
receiving (402), by the client apparatus, the data related to the media content; and
obtaining (404), by the client apparatus, the media content on the basis of the data related to the media content; and
causing the client apparatus to output (408) the media content via a user interface.

3. The method of any preceding claim, wherein the data related to the media content comprises the media content.

4. The method of any preceding claim, wherein the data related to the media content comprises a digital rights management, DRM, key for decrypting the media content, and wherein the method further comprises:
storing (500) the media content in a DRM protected form; and
decrypting (502), by the client apparatus, the media content using the DRM key.

5. The method of claim 4, further comprising:
storing, by the client apparatus, the media content in the DRM protected form.

6. The method of any preceding claim, further comprising:
caching (406), by the client apparatus, the media content for a predetermined time period.

7. The method of any preceding claim, further comprising:
receiving (600), by the server apparatus, a content producer registration request comprising authentication details of the content producer and data related to the content producer;
storing (602), by the server apparatus, the authentication details and the data related to the content producer to the database;
receiving (604), by the server apparatus, an authentication request comprising the authentication details of the content producer; and
performing (606) authentication, by the server apparatus, on the basis of the authentication request, and if the authentication succeeds, transmitting (608), by the server apparatus, a content producer token in response to the authentication request.

8. The method of claim 7, further comprising:
receiving (800), by the server apparatus, a file upload request comprising a media content file and the content producer token;
validating (802), by the server apparatus, the content producer token, and if validating the content producer token succeeds, generating (804), by the server apparatus, a media content identifier for the media content file, and storing (806), by the server apparatus, the media content file and the media content identifier generated for the media content file to the database.

9. The method of any preceding claim 7-8, further comprising:
receiving (1000), by the server apparatus, a license registration request comprising the content producer token and a media content license related to a media content identifier; and
validating (1002), by the server apparatus, the content producer token, and if validating the content producer token succeeds, storing (1004), by the server apparatus, the media content license to the database.

10. The method of any preceding claim, further comprising:
receiving (1200), by the server apparatus, an application registration request comprising authentication details of the client application program and data related to the application;
storing (1202), by the server apparatus, the authentication details and the data related to the client application program to the database;
generating (1204), by the server apparatus, an application key for the client application program and storing (1206) the application key in the database;
transmitting (1208), by the server apparatus, the application key in response to the application registration request.

11. The method of claim 10, further comprising:
receiving (1400), by the server apparatus, an authentication request comprising the authentication details of the of the client application program;
performing (1402) authentication, by the server apparatus, on the basis of the authentication request, and if the authentication succeeds, transmitting (1404), by the server apparatus, an application token in response to the authentication request.
receiving (1500), by the server apparatus, a license acquisition request comprising the application token and a license identifier; and
validating (1502) the application token by the server apparatus, and if validating the application token succeeds, requesting (1504), by the server apparatus, a license related to the license identifier from the database, and if the license is found, generating (1506), by the server apparatus, a relationship between the license and the client application program, and storing (1508), by the server apparatus, the generated relationship in the database.

12. The method of any preceding claim, wherein the license comprises one or more geographical restrictions, and wherein the method further comprises:
acquiring (1800), by the server apparatus, an Internet Protocol, IP, address of the client apparatus;
determining (1802), by the server apparatus, a geographic position of the client apparatus on the basis of the acquired IP address; and
validating, by the server apparatus, the license by comparing (1804) the geographic position of the client apparatus to the one or more geographic restrictions of the license, and if the geographic position of the client apparatus violates the one or more geographic restrictions of the license, failing (1806) the validating.

13. A server apparatus (18) for providing protected media content to a client apparatus executing a client application program, the server apparatus comprising one or more processors (10) and one or more memories (20) including computer program code (22), the one or more memories and the computer program code configured to with the one or more processors, cause the server apparatus at least to perform:
receiving (200) a media content request from the client apparatus, wherein the media content request comprises a media content identifier and an application key;
comparing (202) the application key to one or more application keys stored in a database, wherein the database is configured to store application keys, media content licenses, and data related to media content;
if the application key matches one of the one or more application keys, requesting (204), from the database, a license related to the media content identifier and the application key, and
if the license is found in the database, validating (206) the license, and if the validating succeeds, retrieving (208) data related to the media content from the database, and transmitting (210) the data related to the media content to the client apparatus.

14. A system comprising the client apparatus and the server apparatus (18) of claim 13.

15. A computer program product (22) readable by a computer and comprising program instructions which, when executed by the computer, cause the computer to carry out a computer process comprising:
receiving (200) a media content request, wherein the media content request comprises a media content identifier and an application key;
comparing (202) the application key to one or more application keys stored in a database, wherein the database is configured to store application keys, media content licenses, and data related to media content;
if the application key matches one of the one or more application keys, requesting (204), from the database, a license related to the media content identifier and the application key, and
if the license is found in the database, validating (206) the license, and if the validating succeeds, retrieving (208) data related to the media content from the database, and transmitting (210) the data related to the media content.
